# EUROPÄISCHE PATENTSCHRIFT

(11) **EP 1 727 706 B1**
(45) Veröffentlichungstag und Bekanntmachung des Hinweises auf die Patenterteilung: **27.06.2007**
(21) Anmeldenummer: 05707389.2
(22) Anmeldetag: 15.02.2005
(51) Int. Cl.: B60N 2/44

(54) **FAHRZEUGSITZ MIT SEITENWANGEN**
VEHICLE SEAT COMPRISING LATERAL CHEEKS
SIEGE DE VEHICULE A JOUES LATERALES

(30) Priorität: 26.03.2004 DE 102004014881
(43) Veröffentlichungstag der Anmeldung: 06.12.2006
(73) Patentinhaber: Recaro GmbH & Co. KG, 73230 Kirchheim/Teck (DE)
(72) Erfinder: LACHENMANN, Jürgen, 72622 Nürtingen (DE); KAMMERER, Alexander, 70437 Stuttgart (DE); STRECKER, Matthias, 73207 Plochingen (DE)
(74) Vertreter: Patentanwälte Hosenthien-Held und Dr. Held
(86) Internationale Anmeldenummer: PCT/EP2005/001490
(87) Internationale Veröffentlichungsnummer: WO 2005/095151

(56) Entgegenhaltungen:
- EP-A- 0 229 737
- EP-A- 0 343 025
- DE-A1- 19 726 409
- US-A- 4 965 899
- US-A- 5 280 997
- US-A- 6 129 419

## Beschreibung

Die Erfindung betrifft einen Fahrzeugsitz, insbesondere einen Kraftfahrzeugsitz, mit den Merkmalen des Oberbegriffs des Anspruches 1.

Bei einem bekannten Fahrzeugsitz dieser Art sind in den Seitenwangen an der Struktur Blechflügel angelenkt, welche beim Aufblasen von als Kammereinheiten dienenden Blasen geschwenkt werden, um die Seitenwangen einzustellen. Die Herstellung von solchen einstellbaren Seitenwangen ist aufwendig EP 229737, welches den nächstliegenden Stand der Technik darstellt, offenbart einen solchen Fahrzeugsitz. Es ist ferner ein Fahrzeugsitz bekannt, bei welchem keine schwenkbaren Blechflügel, sondern nur die Blasen vorgesehen sind. Hier ergeben sich beim Aufblasen stark lokalisierte Ausbeulungen der Seitenwangen.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, dass innerhalb der Kammer wenigstens eine feste Platte angeordnet ist, d.h. die flexiblen Wänden der Kammer die feste Platte umschließen, wird zum einen eine großflächige Vergrößerung der Seitenwange beim Aufblasen der Kammer erreicht, und zum anderen vereinfacht sich die Herstellung des Fahrzeugsitzes durch Entfall der schwenkbaren Blechflügel, was die Kosten für den Fahrzeugsitz reduziert. Die Platte ist lose in der Kammer angeordnet. Die Kammereinheit ist als Einheit ausgebildet und damit einfach montierbar, wobei sie sich aufgrund der flexiblen Wänden der Kammer schonend in das Polstermaterial der Seitenwange einfügt, auch im aufgeblasenen Zustand. Die Herstellung der Kammereinheit erfolgt vorzugsweise mittels Verbinden von zwei Wänden entlang ihres Randes, so dass die Platte vor dem Verbinden eingelegt werden kann.

Für eine einfache Vergrößerung der Kammereinheit weist diese in Hinblick auf die feste Platte zwei zueinander um eine gemeinsame Mittelachse klappbare Flügel auf. Zum Begrenzen einer Aufklappbewegung ist zwischen den zwei von der Mittelachse beabstandeten Rändern der Flügel eine Verbindungslasche vorgesehen. Um einerseits die großflächige Vergrößerung der Seitenwange zu erreichen und andererseits eine gute Abstützung zu erhalten, ist vorzugsweise in jedem Flügel jeweils eine Platte angeordnet. Die Kammer erstreckt sich zusammenhängend in beide Flügel, um auch an beiden Flügeln aufgeblasen zu werden. Die Flügel sind in einem leeren Zustand der Kammereinheit vorzugsweise flach zusammengeklappt und in einem aufgeblasenen Zustand der Kammereinheit aufgeklappt, wobei die im leeren Zustand der Kammereinheit innen liegende Wand sich beim Aufblasen der Kammer innerhalb der Kammereinheit wölbt, um die Flügel auseinander zu drücken. Unter dem aufgeblasenen Zustand soll der vollständig oder maximal aufgeblasene Zusatnd verstanden werden. Ein Schlauch zum Aufblasen der Kammer ist vorzugsweise im Bereich der Mittelachse in die Kammer geführt, da die Mittelachse beim Aufklappen der Flügel ihre Lage nicht ändert.

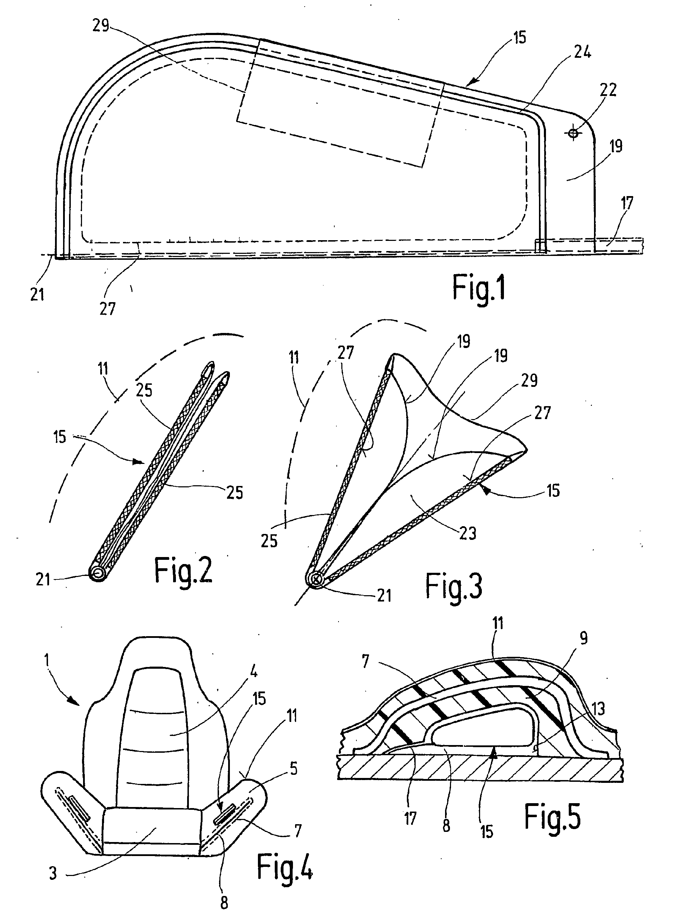

Im folgenden ist die Erfindung anhand eines in der Zeichnung dargestellten Ausführungsbeispiels näher erläutert. Es zeigen
- Fig. 1: eine Seitenansicht einer Kammereinheit,
- Fig. 2: eine Stirnansicht der Kammereinheit im leeren Zustand mit angedeutetem Verlauf des Bezugs,
- Fig. 3: eine Stirnansicht der Kammereinheit im aufgeblasenen Zustand mit angedeutetem Verlauf des Bezugs,
- Fig. 4: eine schematische Vorderansicht eines beispielhaften Fahrzeugsitzes, und
- Fig. 5: eine Seitenansicht der Kammereinheit in der längsgeschnittenen Seitenwange.

Ein als Sportsitz ausgebildeter Fahrzeugsitz 1 für ein Kraftfahrzeug weist an seinem Sitzkissen 3 und an seiner Lehne 4 seitlich jeweils ein Paar von einstellbaren Seitenwangen 5 auf. Dabei sind alle vorgesehenen Seitenwangen 5 prinzipiell gleich aufgebaut, weshalb im folgenden beispielhaft nur eine am Sitzkissen 3 vorgesehene Seitenwange 5 beschrieben ist.

Die in Längsrichtung des Sitzkissens 3 verlaufende Seitenwange 5 ist mit einem Strukturelement 7 versehen, vorliegend einem stählernen Bügel, der an seinen beiden Enden an einem das Sitzkissen 3 tragenden Sitzrahmen fest angebracht ist und ein geschlossenes Blechfeld 8 trägt. Das Strukturelement 7 wird allseitig umschlossen von einem Polsterteil 9 aus Schaumstoff, welches wiederum von einem Bezug 11 auf textiler Basis oder aus Leder bedeckt wird. Zumindest der Bezug 11 ist so geschnitten, dass eine Vergrößerung des Volumens der Seitenwange 5 möglich ist.

In einer Tasche 13 des Polsterteils 9 ist eine Kammereinheit 15 angeordnet, welche im leeren Zustand flach ist und wenigstens näherungsweise in einer durch das Strukturelement 7 und sein Blechfeld 8 definierten, schräg zur Horizontalen ausgerichteten Ebene angeordnet ist. Von einem nicht näher dargestellten Blasebalg oder dergleichen führt über ein Ventil ein Schlauch 17 zur Kammereinheit 15. Die Kammereinheit 15 weist zwei folienartige, flexible, aber nicht dehnbare Wände 19 aus weichem Kunststoff auf, welche bei der Herstellung symmetrisch zu einer Mittelachse 21 geschnitten sind, durch Steuerlöcher 22 vorpositioniert flach aufeinander liegen, und - unter Bildung einer geschlossenen, in sich zusammenhängenden Kammer 23 - am Rand miteinander mittels einer Schweißnaht 24 verschweißt sind, wobei der Schlauch 17 an der Mittelachse 21 mündet und mit eingeschweißt ist.

Die Mittelachse 21 definiert zwei Flügel 25 der Kammereinheit 15, welche im leeren Zustand der Kammereinheit 15 aufeinander geklappt sind, wobei sich die Kammer 23 in beide Flügel 25 erstreckt. In jedem Flügel 25 ist innerhalb der Kammer 23 eine von zwei zueinander symmetrischen, ebenen Platten 27 aus einem festen Kunststoff lose angeordnet, welche im leeren Zustand der Kammereinheit 15 wenigstens näherungsweise parallel zueinander sind. Zwischen den zur Mittelachse 21 beabstandeten Rändern der Kammereinheit 15 bzw. der Flügel 25 ist eine Verbindungslasche 29 aus dem gleichen Material wie die Wände 19 vorgesehen, wobei die Verbindungslasche 29 an ihren Enden mit den Randbereichen der Wände 19 verschweißt ist und im leeren Zustand der Kammereinheit 15 in der Mitte zusammengefaltet ist. Die Verbindungslasche 29 hat quer zur Mittelachse 21 etwa die gleiche Breite wie ein Flügel 25.

Der leere Zustand der Kammereinheit 15 entspricht einer nach außen geöffneten Stellung der Seitenwange 5, welche dann in der Regel mit einem Abstand zum Oberschenkel des Insassens ausgerichtet ist. Um für eine sportliche Fahrweise den Oberschenkel seitlich abzustützen (im Falle einer Seitenwange 7 an der Lehne den Oberkörper seitlich abzustützen), kann die Einstellung der Seitenwange 7 geändert werden, wofür jeweils die Kammereinheit 15 in einen aufgeblasenen Zustand gebracht wird. Hierzu wird über den Schlauch 17 der Kammer 23 Luft zugeführt, d.h. die Kammer 23 aufgeblasen. Aufgrund der geklappten Stellung der Flügel 25 und der dadurch bedingten Faltung der innen gelegenen Wand 19 füllt die zugeführte Luft den Bereich der Kammer 23 zwischen den einander zugewandten Flügeln 25, d.h. den innen liegenden Bereich. Die außen gelegene Wand 19, die bereits straff ist, bleibt nahezu unverändert. Die innen liegende Wand 19 wölbt sich beim Entfalten innerhalb der Kammereinheit 15, so dass sich die in den verschiedenen Flügeln 25 innen gelegenen Bereiche der Kammer 23 voneinander abstoßen und die Flügel 25 auseinander drücken, d.h. die Kammereinheit 15 um die Mittelachse 21 aufklappt, bis die Verbindungslasche 29 gestreckt ist und die Aufklappbewegung bei etwa 60° zwischen den Flügeln 25 begrenzt. Die Kammereinheit 15 hat damit ihren aufgeblasene Zustand erreicht.

Mit dem Aufblasen der Kammer 23 vergrößert sich das Volumen der Kammereinheit 15, welche - aufgrund einer Abstützung der Kammereinheit 15 am Blechfeld 8 - auf der Innenseite der Seitenwange 7 das Polsterteil 9 entsprechend verdrängt und den Bezug 11 mitbewegt, wobei der sich bewegende Bezug 11 zum Ausgleich auf der Außenseite der Seitenwange 7 das Polsterteil 9 komprimiert. Dabei legt sich die Seitenwange 7 in gewünschter, Weise an den Oberschenkel an. Da aufgrund der Platten 27 die Kammereinheit 15 nach außen hin im wesentlichen eben bleibt, erfolgt die Verdrängung des Polsterteils 9 und die Anlage an den Oberschenkel großflächig, was die Abstützung gegenüber eine kugelförmigen Vergrößerung einer Blase verbessert und sich komfortabler als eine solche anfühlt.

### Bezugszeichenliste

- 1: Fahrzeugsitz
- 3: Sitzkissen
- 4: Lehne
- 5: Seitenwange
- 7: Strukturelement
- 9: Polsterteil
- 11: Bezug
- 13: Tasche
- 15: Kammereinheit
- 17: Schlauch
- 19: Wand
- 21: Mittelachse
- 22: Steuerloch
- 23: Kammer
- 24: Schweißnaht
- 25: Flügel
- 27: Platte
- 29: Verbindungslasche

## Patentansprüche

1. Fahrzeugsitz, insbesondere Kraftfahrzeugsitz, mit wenigstens einem an einem Sitzkissen (3) und/oder einer Lehne (4) vorgesehenen Paar von einstellbaren Seitenwangen (5), welche wenigstens eine Kammereinheit (15) mit einer von flexiblen Wänden (19) umschlossenen, aufblasbaren Kammer (23) enthalten, **dadurch gekennzeichnet, dass** innerhalb der Kammer (23) wenigstens eine feste Platte (27) angeordnet ist.

2. Fahrzeugsitz nach Anspruch 1, **dadurch gekennzeichnet, dass** die Kammer (23) durch zwei entlang ihres Randes miteinander verbundene Wände (19) gebildet wird.

3. Fahrzeugsitz nach Anspruch 1 oder 2, **dadurch gekennzeichnet, dass** die Kammereinheit (15) zwei zueinander um eine gemeinsame Mittelachse (21) klappbare Flügel (25) aufweist.

4. Fahrzeugsitz nach Anspruch 3, **dadurch gekennzeichnet, dass** die Kammereinheit (15) eine Verbindungslasche (29) zwischen den zwei von der Mittelachse (21) beabstandeten Rändern der Flügel (25) aufweist.

5. Fahrzeugsitz nach Anspruch 3 oder 4, **dadurch gekennzeichnet, dass** in jedem Flügel (25) jeweils eine Platte (27) angeordnet ist.

6. Fahrzeugsitz nach einem der Ansprüche 3 bis 5, **dadurch gekennzeichnet, dass** die Kammer (23) sich zusammenhängend in beide Flügel (25) erstreckt.

7. Fahrzeugsitz nach einem der Ansprüche 3 bis 6, **dadurch gekennzeichnet, dass** die Flügel (25) in einem leeren Zustand der Kammereinheit (15) zusammengeklappt und in einem aufgeblasenen Zustand der Kammereinheit (15) aufgeklappt sind.

8. Fahrzeugsitz nach Anspruch 2 und 7, **dadurch gekennzeichnet, dass** die im leeren Zustand der Kammereinheit (15) innen liegende Wand (19) sich beim Aufblasen der Kammer (23) innerhalb der Kammereinheit (15) wölbt, um die Flügel (25) auseinander zu drücken.

9. Fahrzeugsitz nach Anspruch 4 und 8, **dadurch gekennzeichnet, dass** die Verbindungslasche (29) die Aufklappbewegung der Flügel (25) begrenzt.

10. Fahrzeugsitz nach einem der Ansprüche 3 bis 9, **dadurch gekennzeichnet, dass** ein Schlauch (17) zum Aufblasen der Kammer (23) im Bereich der Mittelachse (21) in die Kammer (23) geführt ist.

## Claims

1. A vehicle seat, in particular a motor vehicle seat, comprising at least one pair of adjustable lateral cheeks (5) provided on a seat cushion (3) and/or a backrest (4), said lateral cheeks containing at least one chamber unit (15) with an inflatable chamber (23) which is enclosed by flexible walls (19), **characterized in that** at least one fixed plate (27) is arranged within the chamber (23).

2. The vehicle seat as claimed in claim 1, **characterized in that** the chamber (23) is formed by two walls (19) connected to each other along their edge.

3. The vehicle seat as claimed in claim 1 or 2, **characterized in that** the chamber unit (15) has two wings (25) which can be folded with respect to each other about a common central axis (21).

4. The vehicle seat as claimed in claim 3, **characterized in that** the chamber unit (15) has a connecting tab (29) between those two edges of the wings (25) which are spaced apart from the central axis (21).

5. The vehicle seat as claimed in claim 3 or 4, **characterized in that** one plate (27) is arranged in each wing (25).

6. The vehicle seat as claimed in one of claims 3 to 5, **characterized in that** the chamber (23) extends continuously into both wings (25).

7. The vehicle seat as claimed in one of claims 3 to 6, **characterized in that** the wings (25) are folded up in an empty state of the chamber unit (15) and are unfolded in an inflated state of the chamber unit (15).

8. The vehicle seat as claimed in claims 2 and 7, **characterized in that** the wall (19) which is situated on the inside in the empty state of the chamber unit (15) bulges within the chamber unit (15) during inflation of the chamber (23), in order to push the wings (25) apart.

9. The vehicle seat as claimed in claims 4 and 8, **characterized in that** the connecting tab (29) restricts the unfolding movement of the wings (25).

10. The vehicle seat as claimed in one of claims 3 to 9, **characterized in that** a tube (17) for inflating the chamber (23) is guided into the chamber (23) in the region of the central axis (21).

## Revendications

1. - Siège de véhicule, en particulier siège de véhicule automobile, comportant au moins une paire de joues latérales (5) ajustables, disposées contre un coussin de siège (3) et/ou un dossier (4), lesquelles contiennent au moins une unité de chambre (15) avec une chambre (23) gonflable, enfermée par des parois flexibles (19), **caractérisé par le fait qu'**à l'intérieur de la chambre (23) est disposée au moins une plaque rigide (27).

2. - Siège de véhicule selon la revendication 1, **caractérisé par le fait que** la chambre (23) est formée par deux parois (19) reliées l'une à l'autre le long de leur bordure.

3. - Siège de véhicule selon l'une des revendications 1 ou 2, **caractérisé par le fait que** l'unité de chambre (15) présente deux ailes (25) aptes à être pliées l'une vers l'autre autour d'un axe central commun (21).

4. - Siège de véhicule selon la revendication 3, **caractérisé par le fait que** l'unité de chambre (15) présente une languette de liaison (29) entre les deux bordures des ailes (25) éloignées de l'axe central (21).

5. - Siège de véhicule selon l'une des revendications 3 ou 4, **caractérisé par le fait que**, dans chaque aile (25), est disposée à chaque fois une plaque (27).

6. - Siège de véhicule selon l'une des revendications 3 à 5, **caractérisé par le fait que** la chambre (23) s'étend de façon continue dans les deux ailes (25).

7. - Siège de véhicule selon l'une des revendications 3 à 6, **caractérisé par le fait que** les ailes (25) sont repliées dans un état vide de l'unité de chambre (15) et sont ouvertes dans un état gonflé de l'unité de chambre (15).

8. - Siège de véhicule selon les revendications 2 et 7, **caractérisé par le fait que** la paroi (19) se trouvant à l'intérieur à l'état vide de l'unité de chambre (15) se bombe lors du gonflage de la chambre (23) à l'intérieur de l'unité de chambre (15), pour séparer les ailes (25) l'une de l'autre.

9. - Siège de véhicule selon les revendications 4 et 8, **caractérisé par le fait que** la languette de liaison (29) limite le mouvement d'ouverture des ailes (25).

10. - Siège de véhicule selon l'une des revendications 3 à 9, **caractérisé par le fait qu'**un tuyau flexible (17) pour le gonflage de la chambre (23) est conduit dans la région de l'axe central (21) dans la chambre (23).
